# EUROPÄISCHE PATENTSCHRIFT

(11) **EP 3 567 349 B1**
(45) Veröffentlichungstag und Bekanntmachung des Hinweises auf die Patenterteilung: **18.10.2023**
(21) Anmeldenummer: 18171297.7
(22) Anmeldetag: 08.05.2018
(51) Int. Cl.: G01F 23/26, G01F 23/263

(54) **IMPEDANZGRENZSCHALTER MIT ANPASSUNG DER ANREGUNG**
IMPEDANCE LIMIT SWITCHES WITH ADAPTATION OF EXCITATION
INTERRUPTEUR DE FIN DE COURSE D'IMPÉDANCE À RÉGLAGE DE L'EXCITATION

(43) Veröffentlichungstag der Anmeldung: 13.11.2019
(73) Patentinhaber: VEGA Grieshaber KG, 77709 Wolfach (DE)
(72) Erfinder: Allgaier, Volker, 77716 Haslach i. K. (DE); Fehrenbach, Dominik, 78628 Rottweil (DE)
(74) Vertreter: Maiwald GmbH

(56) Entgegenhaltungen:
- EP-A1- 3 153 829
- EP-A1- 3 312 571
- DE-A1-102009 060 742

## Beschreibung

### Gebiet der Erfindung

Die Erfindung betrifft Vorrichtungen und Verfahren zur Füllstandmessung oder Grenzstandbestimmung, insbesondere einen Impedanzgrenzschalter, der auf einem elektrischen Resonanzkreis basiert, weiterhin ein Verfahren zur Grenzstandbestimmung, eine Verwendung, ein Programmelement und ein computerlesbares Medium.

### Hintergrund

Zur Füllstandmessung, beispielsweise in einem Behälter, werden verschiedene Arten von Sensorsystemen eingesetzt. Eine Familie dieser Sensorsysteme sind sog. Grenzstandmelder. Diese werden insbesondere eingesetzt, um einen bestimmten Pegel eines Füllguts, z.B. in einem Behälter, anzuzeigen, d.h. ob etwa eine vordefinierte obere oder untere Grenze des Füllstands in dem Behälter erreicht wurde. Mit den Signalen von dem Grenzstandmelder werden beispielsweise Befülleinrichtungen oder Entleereinrichtungen, wie z.B. Förderbänder oder Pumpen, gesteuert. Eine Fehlfunktion eines Grenzstandmelders kann daher erheblichen Schaden verursachen.

Ein Typus von Grenzstandmeldem sind sog. Impedanzgrenzschalter. Diese weisen eine Elektronikeinheit und eine Messsonde auf. Zwischen Messelektrode und Bezugselektrode bildet sich eine Messkapazität aus, welche mit einer diskreten Induktivität einen Serienschwingkreis bildet. Befindet sich ein Füllgut im Bereich der Messsonde, insbesondere wenn der Impedanzgrenzschalter von dem Füllgut bedeckt wird, so beeinflusst dies die Gesamtkapazität und/oder Gesamtinduktivität des Schwingkreises und ändert damit die Resonanzfrequenz des Schwingkreises.

Zur Messung der Resonanzfrequenz wird der Schwingkreis durch einen Signalgenerator mit veränderlicher Frequenz angeregt. Die Impedanz des Schwingkreises ändert sich dabei über die Frequenz. Dies kann beispielsweise durch eine Kurve veranschaulicht werden, bei welcher der Betrag der Impedanz (y-Achse) über der Frequenz (x-Achse) angetragen ist. Diese Kurve wird gelegentlich "Impedanzkurve" genannt. Die Kurve zeigt ein Minimum bei der Resonanzfrequenz des Schwingkreises. Weil bei Bedeckung des Impedanzgrenzschalters mit dem Füllgut die Resonanzfrequenz des Schwingkreises - und damit das Minimum der Impedanz - bei einer anderen Frequenz liegt als ohne Bedeckung, kann mit diesem Messprinzip eine klare Unterscheidung vorgenommen werden, ob der Impedanzgrenzschalter von dem Füllgut bedeckt ist oder nicht, d.h. ob die vordefinierte obere oder untere Grenze des Füllstands erreicht wurde.

Die DE 10 2009 060 742 A1 offenbart eine Einrichtung zum Erkennen eines Pegelstands von Medien mit einer Messsonde und einem Frequenzgenerator mit variabler Frequenz. Das gemessene Frequenzspektrum unterscheidet sich je nach Bedeckung des Sondenleiters mit dem Medium. In einer Auswerte- und Steuereinheit sind die zweiten Amplitudenminima der Frequenzspektren, für verschiedene Bedeckungsgrade mit dem Medium, abgelegt. Ein Messwert wird mit diesen zweiten Amplitudenminima, unter Berücksichtigung eines Bewertungsfensters um ein Amplitudenminimum von Luft, verglichen.

Beim Betrieb einer Anlage mit einem Impedanzgrenzschalter können aber Störeinstrahlungen auftreten, die von einem Störsender verursacht werden. Derartige Störsender können z.B.

Förderbänder oder Pumpen sein, die von dem Impedanzgrenzschalter gesteuert werden und die in vielen Fällen in der Nähe des Impedanzgrenzschalters angeordnet sind. Durch diese Störeinstrahlungen wird die Resonanzkurve des Schwingkreises durch das Störsignal überlagert. Dadurch kann, abhängig von Intensität und Frequenz des Störsignals, das gemessene Minimum der Impedanz verschoben werden und, als Folge dieser Verschiebung, fälschlicherweise ein Schaltzustand "Bedeckung" oder ein Schaltzustand "Nicht-Bedeckung" bestimmt werden.

### Zusammenfassung der Erfindung

Die Aufgabe der Erfindung ist es, die Nachteile des Standes der Technik wenigstens teilweise zu überwinden, insbesondere trotz Störeinstrahlungen den korrekten Schaltzustand des Impedanzgrenzschalters mit hoher Wahrscheinlichkeit zu erkennen.

Diese Aufgabe wird durch den Gegenstand der unabhängigen Patentansprüche gelöst. Weiterbildungen der Erfindung ergeben sich aus den Unteransprüchen und der folgenden Beschreibung.

Ein Impedanzgrenzschalter zur Bestimmung der Bedeckung des Impedanzgrenzschalters mit einem Füllgut weist dabei eine Messsonde auf, welche zumindest teilweise innerhalb eines Behälters angeordnet ist. Der Behälter kann ein Gefäß von beliebiger Form sein. Der Behälter kann auch ein Gerinne, beispielsweise ein Bach- oder Flussbett sein. Der Impedanzgrenzschalter kann an einer beliebigen Stelle innerhalb des Behälters angeordnet sein.

Die Messsonde weist dabei mindestens eine Messelektrode, eine Bezugselektrode und eine vordefinierte Induktivität auf. Der Schwingkreis ist ein Serienschwingkreis, bei dem die Induktivität in Reihe geschalten ist mit einem Kondensator, der die Messelektrode und die Bezugselektrode aufweist. Dieser Kondensator wird gelegentlich als "Messkapazität" bezeichnet. Diese Messkapazität ist innerhalb der Messsonde so angeordnet, dass diese sich in der Nähe der Oberfläche der Messsonde befindet, damit die Messsonde eine möglichst hohe Empfindlichkeit für die Beeinflussung durch die kapazitiven und/oder induktiven Eigenschaften des Füllguts aufweist. Das Füllgut kann z.B. eine Flüssigkeit oder Schüttgut sein.

Ferner weist der Impedanzgrenzschalter einen Frequenzgenerator mit variabler Frequenz auf, welcher dazu eingerichtet ist, die Messsonde mit einer Frequenz zu beaufschlagen. Es handelt sich dabei um einen sog. Wobbelgenerator, der auch unter den Bezeichnungen Wobbler, Wobbelsender oder "sweep generator" bekannt ist. Ein Wobbelgenerator variiert die erzeugte Frequenz innerhalb einer vordefinierten Zeitspanne zwischen zwei einstellbaren Endwerten, d.h. zwischen einer vordefinierten ersten Frequenz und einer vordefinierten zweiten Frequenz.

Der Frequenzgenerator ist mit der Messsonde verbunden und dazu eingerichtet, die Messsonde mit einer von diesem erzeugten Frequenz zu beaufschlagen. In einer Ausführungsform der Erfindung kann der Frequenzgenerator eine spannungsgesteuerte Oszillatorschaltung sein, ein sog. VCO (Voltage Controlled Oscillator).

Weiterhin weist der Impedanzgrenzschalter eine Analyseeinheit auf. Diese ist dazu eingerichtet, die Impedanz der Messsonde bei einer bestimmten Frequenz, bzw. innerhalb des vom Frequenzgenerator erzeugen Frequenzbereichs, zu messen. Dabei kann ein Störsender die durch die Analyseeinheit gemessenen Impedanzwerte beeinflussen, da die Frequenzen, die der Störsender erzeugt, die Messwerte der Analyseeinheit überlagern können.

Der Impedanzgrenzschalter ist eingerichtet, zur Messung der Bedeckung die folgenden Schritte durchzuführen:
- Beaufschlagen der Messsonde mit einer vordefinierten ersten Frequenz, gewissermaßen mit der Startfrequenz des Wobbelgenerators und kontinuierliches oder schrittweises Verändern der Frequenz, innerhalb einer vordefinierten Zeitspanne, bis zu einer vordefinierten zweiten Frequenz. Dabei hängt es von der Art des Wobbelgenerators ab, ob die Frequenz kontinuierlich oder schrittweise verändert wird. Es ist bei vielen Wobbelgeneratoren einstellbar, ob der vordefinierte Frequenzbereich von einer niedrigeren Frequenz bis zu einer höheren Frequenz durchlaufen wird oder umgekehrt. Beides ist im Sinne dieser Erfindung.
- Bestimmung eines Messwerts der Impedanz der Messsonde an jeder ersten Stützstelle der kontinuierlich oder schrittweise veränderten Frequenz.
- Bestimmung einer Vielzahl von lokalen Minima der gemessenen Impedanz der Messsonde, aus den Messwerten der Impedanz an den ersten Stützstellen. Die gemessene Impedanz entspricht nur bei einer störungsfreien Messung der tatsächlichen Impedanz der Messsonde. Wenn hingegen ein Störsender die Messwerte beeinflusst, dann können diese Messwerte von der tatsächlichen Impedanz der Messsonde - sogar erheblich - abweichen. Weil in der Regel nicht bekannt ist, bei welchen Frequenzen der Störsender wie stark sendet, kann durch die Überlagerung mit den Frequenzen der Störsender ein falsches globales Minimum der Impedanz gemessen werden, beispielsweise ein globales Minimum, das an einer anderen Frequenz liegt als das tatsächliche globale Minimum. Dies ist insbesondere deshalb kritisch, weil das globale Minimum der Impedanz ein Indikator für die Bestimmung der Bedeckung des Impedanzgrenzschalters mit dem Füllgut ist.

- Bestimmung eines Qualitätskriteriums aus einer Mehrzahl von Messwerten. Dieses Qualitätskriterium kann auf Basis von Messwerten aus dem letzten Messvorgang bestimmt werden, aus einem der vorangegangenen Messvorgänge, oder auch auf Basis einer oder mehrerer Messwerte, die beispielsweise bei der Kalibrierung des Systems gemessen wurden. Das Qualitätskriterium wird als ein Indiz dafür genommen, ob die gemessenen Werte, und insbesondere die Vielzahl von lokalen Minima, überhaupt eine belastbare Basis bieten für die Entscheidung, ob der Impedanzgrenzschalter mit dem Füllgut bedeckt ist oder nicht. Das Qualitätskriterium liefert also mindestens eine diesbezügliche Ja/Nein-Entscheidung; es kann darüberhinaus aber auch ein Maß für die Qualität der Messung liefern.
- Wenn das Qualitätskriterium für die Messung nicht erfüllt ist, dann veranlasst der Impedanzgrenzschalter das Beaufschlagen der Messsonde mit der vordefinierten ersten Frequenz und kontinuierliches oder schrittweises Verändern der Frequenz, innerhalb einer vordefinierten zweiten Zeitspanne, die sich von der ersten Zeitspanne unterscheidet, bis zu der vordefinierten zweiten Frequenz, und Bestimmung eines Messwerts der Impedanz der Messsonde an jeder zweiten Stützstelle der kontinuierlich oder schrittweise veränderten Frequenz, wobei die Anzahl der zweiten Stützstellen sich von der Anzahl der ersten Stützstellen unterscheidet. Es wird also eine "Nachmessung" veranlasst, mit geänderten Werten für die Zeitspanne und die Anzahl der Stützstellen.

Die erste und zweite Frequenz bleibt dabei in vielen Ausführungsformen unverändert. In anderen Ausführungsformen werden die erste und zweite Frequenz verändert, beispielsweise kann ein engerer Frequenzbereich um die die Resonanzfrequenz ausgewählt werden, oder auch ein breiterer Frequenzbereich, um die Auswirkung des Störsenders stärker durch das Qualitätskriterium zu berücksichtigen.

In einigen Ausführungsformen ist die vordefinierte zweite Zeitspanne länger als die erste Zeitspanne. Dies kann einhergehen mit einer Erhöhung der Anzahl der Stützstellen, so dass die Anzahl der zweiten Stützstellen höher, insbesondere deutlich höher, ist als die Anzahl der ersten Stützstellen.

Dieses Vorgehen kann dazu führen, dass mehrere Nachmessungen stattfinden und/oder die vordefinierte zweite Zeitspanne und/oder die Anzahl der zweiten Stützstellen mehrfach variiert werden müssen, um das Qualitätskriterium zu erfüllen. In einer Ausführungsform kann die vordefinierte zweite Zeitspanne und/oder die Anzahl der zweiten Stützstellen, die zu einem positiven Qualitätskriterium führten, in einem Speicher vermerkt sein, so dass die Nachmessungen bevorzugt mit diesen Werten durchgeführt werden.
- Wenn das Qualitätskriterium für die Messung erfüllt ist, dann veranlasst der Impedanzgrenzschalter die Bestimmung, ob ein globales Minimum, aus der Vielzahl von lokalen Minima, über oder unter der Grenzfrequenz für die Impedanz in Luft liegt, woraus sich die Bedeckung bestimmen lässt.

Wenn also die gemessenen Werte eine belastbare Basis bieten für die Entscheidung, ob der Impedanzgrenzschalter mit dem Füllgut bedeckt ist, dann wird das gemessene globale Minimum als relevante Resonanzfrequenz angesehen und auf dieser Basis die Bedeckung bestimmt.

Erfindungsgemäß beinhaltet das Qualitätskriterium für die Messung:
- Die Bestimmung eines Frequenzsicherheitsabstandes aus der Differenz der Grenzfrequenz für die Impedanz in Luft von der Grenzfrequenz für die Impedanz in dem Füllgut. Diese Bestimmung kann beispielsweise bei der Kalibrierung oder dem Qualitätstest des Impedanzgrenzschalters durchgeführt werden. In einer Ausführungsform werden die Grenzfrequenzen für die Impedanz in Luft und für die Impedanz von verschiedenen Arten von Füllgut in einem Speicher hinterlegt, wahlweise für jeden einzelnen Impedanzgrenzschalter oder für eine bestimmte Serie.
- Bestimmung eines Frequenzfehlerabstandes aus der Differenz des globalen Minimums und eines zweit-globalen Minimums der Impedanz. Dabei ist das zweit-globale Minimum diejenige Frequenz, d.h. dasjenige gemessene lokale Minimum, das - neben dem globalen Minimum - den zweitniedrigsten Wert für die Impedanz hat.
- Bestimmung, ob der Frequenzsicherheitsabstand größer ist als der k-fache Frequenzfehlerabstand, wobei der Faktor k einen Wert zwischen 0,5 und 0,7, insbesondere den Wert 0,5, hat.

In einigen Ausführungsformen sind die vordefinierte zweite Zeitspanne und die Anzahl der zweiten Stützstellen Funktionen des Frequenzfehlerabstandes und des Frequenzsicherheitsabstandes.

In einigen Ausführungsformen erfolgt, wenn das Qualitätskriterium für die Messung erfüllt ist, als weiterer Schritt: Beaufschlagen der Messsonde mit der vordefinierten ersten Frequenz und kontinuierliches oder schrittweises Verändern der Frequenz, innerhalb einer vordefinierten dritten Zeitspanne, die sich von der ersten und der zweiten Zeitspanne unterscheidet, bis zu der vordefinierten zweiten Frequenz; und Bestimmung einer der Impedanz der Messsonde, aus den Messwerten der Impedanz an den dritten Stützstellen, deren Anzahl sich von der Anzahl der ersten und der zweiten Stützstellen unterscheidet. Dabei sind die vordefinierte dritte Zeitspanne und die Anzahl der dritten Stützstellen Funktionen des Frequenzfehlerabstandes und des Frequenzsicherheitsabstandes. In einigen Ausführungsformen ist die vordefinierte dritte Zeitspanne kürzer als die erste Zeitspanne. Dies führt vorteilhafterweise zu einer weiteren Reduzierung des Energieverbrauchs des Impedanzgrenzschalters.

Die beschriebenen Bestimmungen der Bedeckung sind auch mit einem Parallelschwingkreis möglich. Dabei liegt bei der Resonanzfrequenz das Maximum der Impedanz. Sämtliche Angaben, die sich in den vorangegangenen Absätzen auf lokale und globale Minima beziehen, müssen bei Verwendung eines Parallelschwingkreises angepasst, d.h. statt dessen auf lokale und globale Maxima bezogen werden.

In einer Ausführungsform der Erfindung beträgt die Anzahl der Stützstellen zwischen 100 und 10000, bevorzugt zwischen 200 und 1000, besonders bevorzugt zwischen 300 und 500. Die Stützstellen können äquidistant beabstandet sein. Die Stützstellen können aber auch logarithmisch äquidistant oder mit einer anderen Funktion bewertet äquidistant sein.

In einer Ausführungsform der Erfindung ist die vordefinierte erste Frequenz die untere Frequenz und liegt in einem Bereich zwischen 10 MHz und 500 MHz, beispielsweise in einem Bereich zwischen 50 MHz und 250 MHz, insbesondere in einem Bereich zwischen 90 MHz und 120 MHz. Die vordefinierte zweite Frequenz ist dabei die obere Frequenz und liegt in einem Bereich zwischen 20 MHz und 1000 MHz, beispielsweise in einem Bereich zwischen 100 und 500 MHz, insbesondere in einem Bereich zwischen 170 MHz und 250 MHz. Dabei findet die Messung von der unteren zur oberen Frequenz statt. Diese gewählten Frequenzbereiche weisen den Vorteil auf, dass damit die Messsonde relativ klein gehalten werden kann.

In einer Ausführungsform der Erfindung ist die vordefinierte erste Frequenz die obere Frequenz und die vordefinierte zweite Frequenz ist die untere Frequenz. Dabei findet die Messung von der oberen zur unteren Frequenz statt.

In einer Ausführungsform beträgt die vordefinierte erste Zeitspanne und die vordefinierte zweite Zeitspanne zwischen 1 ms und 1000 ms, bevorzugt zwischen 5 ms und 200 ms. Die längeren Zeitspannen beanspruchen die Stromversorgung länger, was bei akku- oder batteriebetriebenen Geräten eine Rolle spielen kann. In manchen Ausführungsformen können die längeren Zeitspannen zu einer präziseren Bestimmung der lokalen Minima führen.

In einer Ausführungsform weist die Messsonde eine Messelektrode und eine Bezugselektrode auf, so dass sich zwischen der Messelektrode und der Bezugselektrode eine Messimpedanz, oder eine Messkapazität und einen Messwiderstand, ausbildet, welche mit einer diskreten Induktivität eine Serienresonanz erzeugt. In einer anderen Ausführungsform ist die Messkapazität mit der Induktivität parallel geschaltet. Damit erreicht der Betrag der Impedanz bei der Resonanzfrequenz ein Maximum. Die Bestimmung der Bedeckung des Impedanzgrenzschalters verwendet dabei die lokalen und globalen Maxima, statt der oben erläuterten lokalen und globalen Minima.

In einer Ausführungsform sind die Messsonde, der Frequenzgenerator und die Analyseeinheit, insbesondere zusammen mit einer Stromversorgung, in einem Gehäuse und/oder auf einer Platine angeordnet. Diese Anordnung hat den Vorteil, dass damit die Beeinflussung durch den Störsender minimiert wird.

In einer Ausführungsform sind in dem Gehäuse und/oder auf der Platine weiterhin eine drahtgebundene oder eine drahtlose Kommunikationseinheit angeordnet. Dies eignet sich insbesondere für Anlagen, die mehrere dezentrale Messpunkte aufweisen. Dementsprechend können für die Kommunikation z.B. Feldbusse oder drahtlose Kommunikationsprotokolle verwendet werden.

In einigen Ausführungsformen ist der Störsender eine EMV-Immission. Diese können insbesondere von einem Elektromotor oder einem Ottomotor verursacht werden. Diese Motoren können beispielsweise Teile von Förderbändern, von Förderpumpen oder von Rührwerken sein. In manchen Ausführungsformen wird die Störung durch eine EMV-Immission nach mindestens einer der Prüfgrundlagen IEC 61000-6-2, IEC 61000-4-20, IEC 61326-1, IEC 61326-2-3, NE 21 und/oder E10 bestimmt. Weiterhin kann die Störfestigkeit des Impedanzgrenzschalters nach mindestens einer von diesen Normen geprüft werden.

Der Impedanzgrenzschalter oder das hier beschriebene Verfahren wird zur Bestimmung des Füllstandes von Flüssigkeiten, insbesondere von Wasser, Saft, Milch, Alkohole, Öle, Farbe, Ketchup, Honig, bevorzugt mit einem DK-Wert zwischen 1,5 und 81, oder von Schüttgut, insbesondere von granulierten oder pulverförmigen Schüttgütern, z.B. Mehl, Sand, Kaffeepulver, Kunststoffgranulat, bevorzugt mit einem DK-Wert zwischen 1,5 und 81, verwendet.

Gemäß einer Ausführungsform beinhaltet der Impedanzgrenzschalter ein Programmelement, welches, wenn es auf der Prozessoreinheit eines Impedanzgrenzschalters ausgeführt wird, den Impedanzgrenzschalter anweist, das hier beschriebene Verfahren durchzuführen. Die Analyseeinheit kann Teil der Prozessoreinheit sein.

Der Impedanzgrenzschalter kann weiterhin ein computerlesbares Medium beinhalten, auf dem das hier beschriebene Programmelement gespeichert ist.

### Kurze Beschreibung der Figuren

**Fig. 1** zeigt eine schematische Übersicht über ein System oder eine Anlage mit zwei Impedanzgrenzschaltern;
**Fig. 2** zeigt eine Darstellung einer ungestörten Impedanzkurve, die mittels eines Impedanzgrenzschalters gemessen wurde;
**Fig. 3a** zeigt eine gestörte Impedanzkurve, bei der das gemessene globale Minimum um einen geringen Betrag verschoben wurde;
**Fig. 3b** zeigt eine gestörte Impedanzkurve, bei der das gemessene globale Minimum um einen erheblichen Betrag verschoben wurde;
**Fig. 4** zeigt ein Beispiel für einen Frequenzsicherheitsabstand am Beispiel einer ungestörten Impedanzkurve;
**Fig. 5** zeigt ein Beispiel für einen Frequenzfehlerabstand am Beispiel einer gestörten Impedanzkurve;
**Fig. 6** zeigt ein Beispiel für eine gestörte Impedanzkurve, bei der die Anzahl der Stützstellen erhöht wurde;
**Fig. 7** zeigt ein Verfahren zur Bestimmung der Bedeckung eines Impedanzgrenzschalters mit einem Füllgut.

### Detaillierte Beschreibung von Ausführungsformen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente.

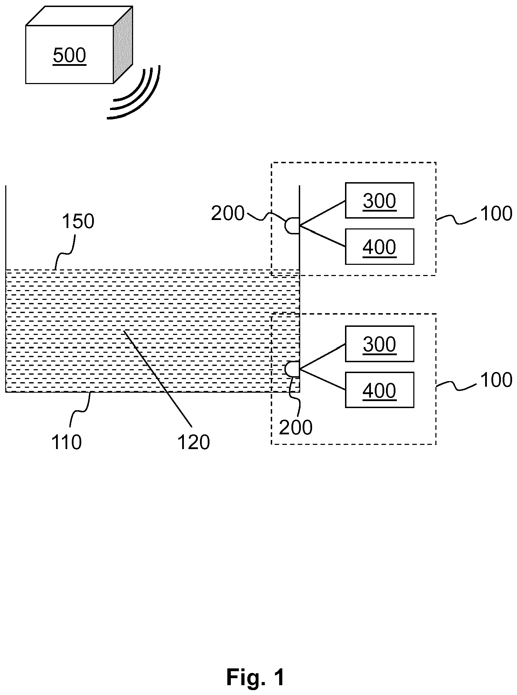

**Fig. 1** zeigt eine schematische Übersicht über ein Beispielsystem oder eine Beispielanlage mit zwei Impedanzgrenzschaltern 100. Der Impedanzgrenzschalter 100 weist eine Messsonde 200, einen Frequenzgenerator 300 mit variabler Frequenz und eine Analyseeinheit 400 auf. Der Frequenzgenerator 300 und die Analyseeinheit 400 sind mit der Messsonde 200 verbunden, so dass der Frequenzgenerator 300 die Messsonde 200 mit einer Frequenz beaufschlagen kann und die Analyseeinheit 400 die Impedanz der Messsonde 200 bei einer bestimmten Frequenz messen und/oder bestimmen kann. Jede der Messsonden 200 ist innerhalb des Behälters 110 angeordnet. Der Behälter 110 enthält Füllgut 120, bis zu einem Füllstand 150. In dem gezeigten Beispiel ist eine der Messsonden 200 oberhalb des Füllstandes 150 angeordnet, die andere der Messsonden 200 unterhalb. Der Impedanzgrenzschalter 100 wird von einem Störsender 500 beeinflusst, so dass die durch die Analyseeinheit 400 gemessene Impedanz mit den Frequenz des Störsenders 500 überlagert wird und insbesondere fehlerhaft sein kann.

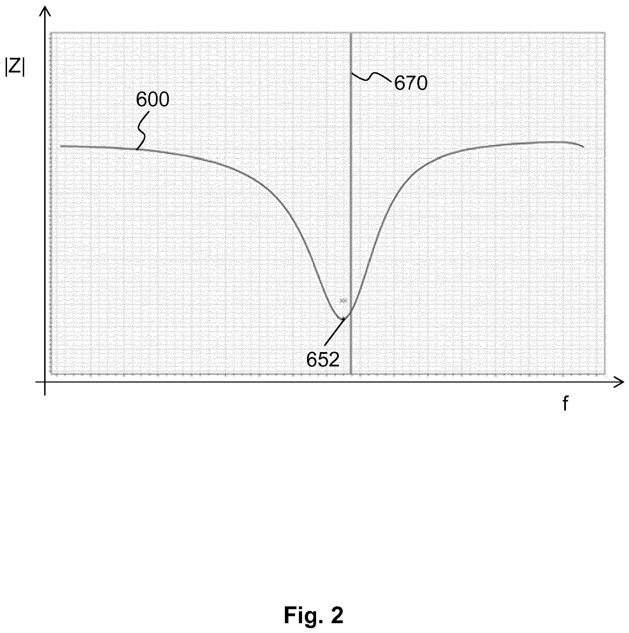

In **Fig. 2** ist eine ungestörte Impedanzkurve 600 dargestellt. Bei diesem Diagramm (und auch bei den folgenden Diagrammen) ist die Frequenz f an der x-Achse angetragen und der Betrag der Impedanz |Z| an der y-Achse angetragen. Die Impedanzkurve 600 wurde beispielsweise mittels des unteren Impedanzgrenzschalters 100 von **Fig. 1** an zahlreichen Stützstellen 640 (nicht dargestellt) gemessen. Dabei ist deutlich das globale Minimum 652 der gemessenen Impedanz zu sehen. Außerdem ist eine Impedanzgrenzlinie 670 angetragen, welche die Grenzfrequenz für die Bedeckung der Messsonde 200 mit dem Füllgut 120 angibt. Liegt das globale Minimum 652 links von der Impedanzgrenzlinie 670, so ist die Messsonde 200 mit dem Füllgut 120 bedeckt, was in diesem beispielsweise der Fall ist.

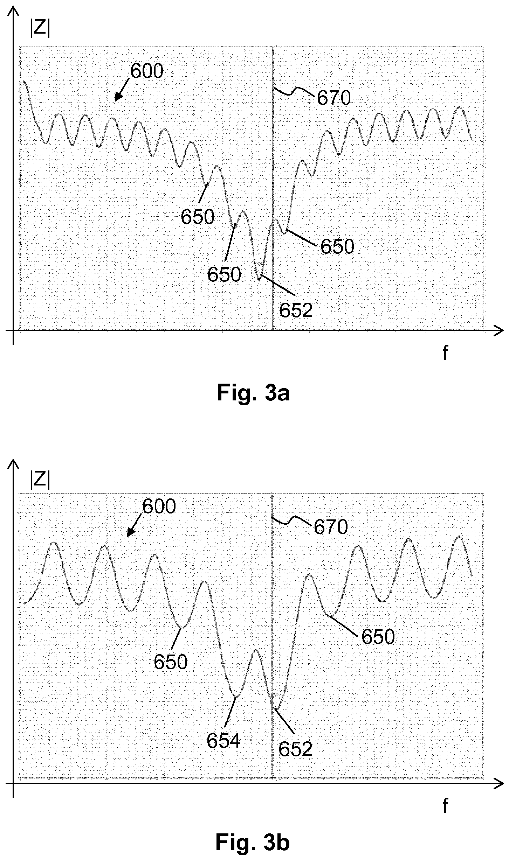

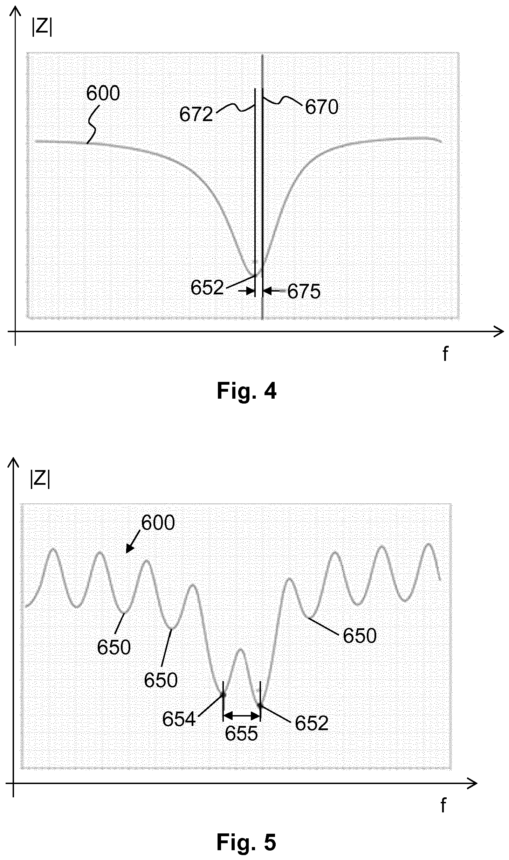

Bei realen Messungen kann aber eine Überlagerung mit den Frequenzen des Störsenders 500 stattfinden. Beispiele für daraus resultierende Diagramme sind in **Fig. 3a, 3b** und **4** dargestellt. Die gemessene Impedanzkurven 600 erscheinen dabei stark "wellig", so dass das Messergebnis eine Vielzahl von lokalen Minima 650 zeigt. Wenn der Störsender 500 eine EMV-Immission ist, dann kann die Verteilung der lokalen Minima 650 von Messung zu Messung stark zufällig sein und kann auch schwanken.

Bei einer Messung, wie sie in **Fig. 3a** dargestellt ist, führt die Überlagerung durch den Störsender 500 zwar zu einer hohen Welligkeit der Impedanzkurve 600. Jedoch resultiert in dem gezeigten Diagramm daraus keine fehlerhafte Bestimmung des Bedeckungszustands, weil das gemessene globale Minimum 652, das aus der Vielzahl von lokalen Minima 650 ausgewählt wurde, zufällig nur um einen geringen Betrag verschoben wurde und weiterhin links von der Impedanzgrenzlinie 670 liegt.

Bei einer Messung, wie sie in **Fig. 3b** dargestellt ist, führt die Überlagerung durch den Störsender 500 auch zu einer hohen Welligkeit der Impedanzkurve 600 und unterscheidet sich auf den ersten Blick nur geringfügig von der Messung von **Fig. 3a****.** Allerdings führt in diesem Fall die zufällige Verteilung der lokalen Minima 650 dazu, dass das gemessene globale Minimum 652 um einen erheblichen Betrag verschoben wurde und daher rechts von der Impedanzgrenzlinie 670 liegt. Damit kommt der Impedanzgrenzschalter 100 zu einer fehlerhaften Bestimmung des Bedeckungszustands, nämlich zu dem fehlerhaften Ergebnis "Messsonde 200 nicht bedeckt". Es ist auch das sog. zweit-globale Minimum 654 der gemessenen Impedanz abgebildet, das von einer Ausführungsform des Impedanzgrenzschalters 100 zur Bestimmung des Qualitätskriteriums verwendet wird.

**Fig. 4** zeigt ein Beispiel für die Bestimmung eines Frequenzsicherheitsabstand 675. In einer Ausführungsform wird der Frequenzsicherheitsabstand 675 bei einem Funktionstest des Impedanzgrenzschalters 100 gemessen. Dabei werden die Grenzfrequenz für die Impedanz in Luft 670 und die Grenzfrequenz für die Impedanz in dem Füllgut 672 gemessen. Der Abstand dieser beiden Resonanzfrequenzen oder - unter Berücksichtigung von Messqualitäten - der beiden Grenzfrequenzen wird als Frequenzsicherheitsabstand 675 bezeichnet,

**Fig. 5** zeigt ein Beispiel für die Bestimmung eines Frequenzfehlerabstands 655 bei einer Messung. Dazu wird, aus den lokalen Minima 650, das globale Minimum 652 und das zweit-globale Minimum 654 der gemessenen Impedanz ausgewählt. Diese weisen die niedrigste bzw. die zweitniedrigste Impedanz einer Messung auf.

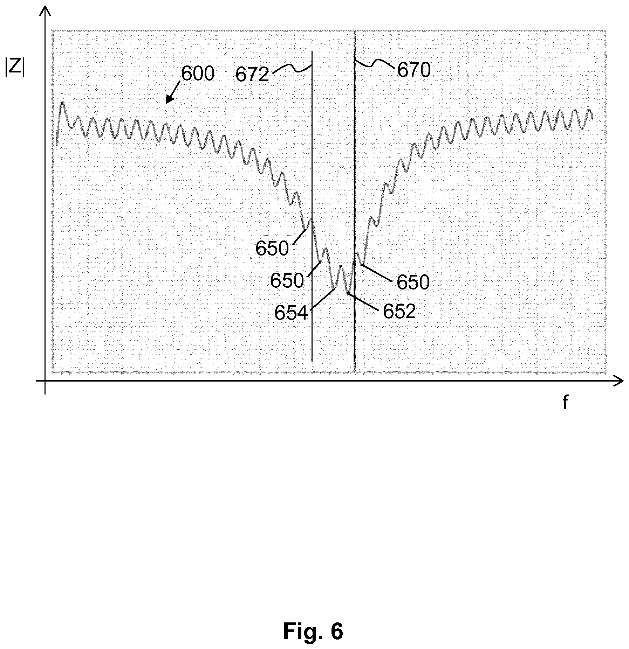

Nach der Messung des Frequenzsicherheitsabstands 675 (siehe **Fig. 4**) und des Frequenzfehlerabstands 655 (siehe **Fig. 5**) lässt sich in einigen Ausführungsformen das Qualitätskriterium für die Messung bestimmen. Diese ist beispielsweise in **Fig. 3b** nicht erfüllt, so dass diese Messung nicht für die Bestimmung der Bedeckung verwendet werden kann. In einem solchen Fall veranlasst der Impedanzgrenzschalters 100 eine weitere Messung. Deren Ergebnis kann eine Impedanzkurve 600 ergeben, wie sie in **Fig. 6** dargestellt ist. Dabei ist zu sehen, dass die globalen Minima 650 näher zusammen sind. Dies kann durch mehrere Faktoren verursacht sein, insbesondere auch durch eine erhöhte Anzahl von zweite Stützstellen 642. Bei Anwendung des oben genannten beispielhaften Qualitätskriteriums lässt sich klar erkennen, dass der Frequenzsicherheitsabstand 675 größer ist als der 0,5-fache Frequenzfehlerabstand 655, so dass diese Messung verwendet werden kann. Dabei zeigt sich, dass das globale Minimum 652 links von der Grenzfrequenz 670 liegt und daher korrekterweise eine Bedeckung mit dem Füllgut anzeigt.

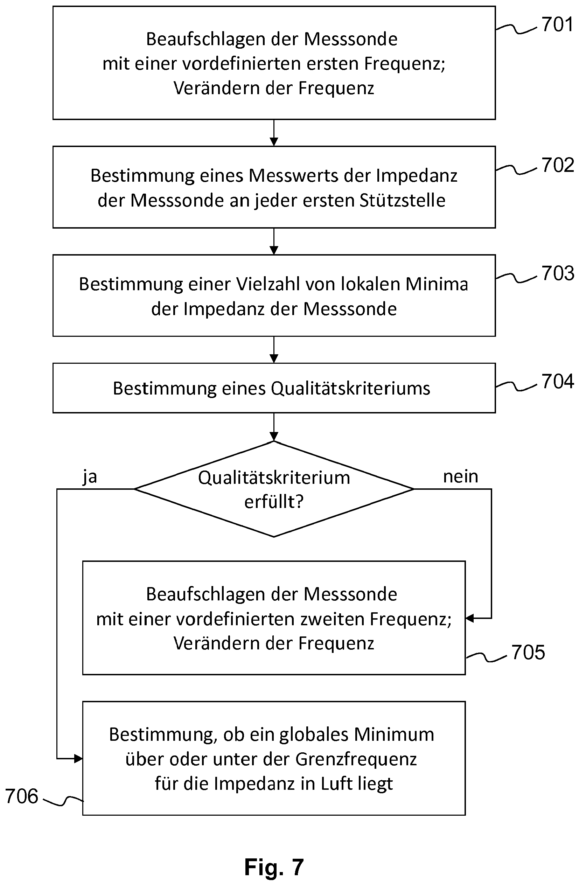

Die Erfindung umfasst auch ein Verfahren zur Bestimmung der Bedeckung eines Impedanzgrenzschalters mit einem Füllgut, mittels des Impedanzgrenzschalters, unter Einwirkung eines Störsenders, wie es in **Fig. 7** dargestellt ist. Das Verfahren weist folgende Schritte auf:
In Schritt 701 erfolgt das Beaufschlagen der Messsonde mit einer vordefinierten ersten Frequenz und kontinuierliches oder schrittweises Verändern der Frequenz, innerhalb einer vordefinierten ersten Zeitspanne, bis zu einer vordefinierten zweiten Frequenz.

In Schritt 702 wird ein Messwert der Impedanz der Messsonde bestimmt, und zwar an jeder ersten Stützstelle der kontinuierlich oder schrittweise veränderten Frequenz.

In Schritt 703 erfolgt die Bestimmung einer Vielzahl von lokalen Minima der Impedanz der Messsonde, aus den Messwerten der Impedanz an den ersten Stützstellen.

In Schritt 704 erfolgt die Bestimmung eines Qualitätskriteriums aus einer Mehrzahl von Messwerten. Ist das Qualitätskriterium für die Messung nicht erfüllt, dann wird, in Schritt 705, die Messsonde mit der vordefinierten ersten Frequenz beaufschlagt und die Frequenz wird kontinuierlich oder schrittweise verändert, und zwar innerhalb einer vordefinierten zweiten Zeitspanne, die sich von der ersten Zeitspanne unterscheidet. Die Frequenz wird bis zu der vordefinierten zweiten Frequenz. Dabei erfolgt die Bestimmung eines Messwerts der Impedanz der Messsonde an jeder zweiten Stützstelle der kontinuierlich oder schrittweise veränderten Frequenz, wobei die Anzahl der zweiten Stützstellen sich von der Anzahl der ersten Stützstellen unterscheidet. Wenn das Qualitätskriterium für die Messung erfüllt ist, wird, in Schritt 706, bestimmt, ob ein globales Minimum, aus der Vielzahl von lokalen Minima, über oder unter der Grenzfrequenz für die Impedanz in Luft liegt. Daraus lässt sich die Bedeckung bestimmen.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Liste der Bezugszeichen

- 100: Impedanzgrenzschalter
- 110: Behälter
- 120: Füllgut
- 150: Füllstand
- 200: Messsonde
- 300: Frequenzgenerator
- 400: Analyseeinheit
- 450: Prozessoreinheit
- 500: Störsender
- 600: Impedanzkurve
- 610: vordefinierte erste Frequenz
- 620: vordefinierte zweite Frequenz
- 631: vordefinierte erste Zeitspanne
- 632: vordefinierte zweite Zeitspanne
- 633: vordefinierte dritte Zeitspanne
- 641: erste Stützstelle
- 642: zweite Stützstelle
- 643: dritte Stützstelle
- 650: lokales Minimum der gemessenen Impedanz
- 652: globales Minimum der gemessenen Impedanz
- 654: zweit-globales Minimum der gemessenen Impedanz
- 655: Frequenzfehlerabstand
- 670: Grenzfrequenz für die Impedanz in Luft
- 672: Grenzfrequenz für die Impedanz in dem Füllgut
- 675: Frequenzsicherheitsabstand Luft und Flüssigkeit
- 701 bis 706: Schritte des Verfahrens

## Patentansprüche

1. Impedanzgrenzschalter (100) zur Bestimmung der Bedeckung des Impedanzgrenzschalters (100) mit einem Füllgut (120), aufweisend:
eine Messsonde (200),
einen Frequenzgenerator (300) mit variabler Frequenz, welcher dazu eingerichtet ist, die Messsonde (200) mit einer Frequenz zu beaufschlagen, und
eine Analyseeinheit (400), welche dazu eingerichtet ist, die Impedanz der Messsonde (200) bei einer bestimmten Frequenz zu bestimmen,
wobei die durch die Analyseeinheit (400) gemessene Impedanz durch einen Störsender (500) beeinflussbar ist,
wobei der Impedanzgrenzschalter (100) eingerichtet ist, folgende Schritte auszuführen:
- Beaufschlagen der Messsonde (200) mit einer vordefinierten ersten Frequenz (610) und kontinuierliches oder schrittweises Verändern der Frequenz, innerhalb einer vordefinierten ersten Zeitspanne (631), bis zu einer vordefinierten zweiten Frequenz (620);
- Bestimmung eines Messwerts der Impedanz der Messsonde (200) an jeder ersten Stützstelle (641) der kontinuierlich oder schrittweise veränderten Frequenz;
- Bestimmung einer Vielzahl von lokalen Minima (650) der Impedanz der Messsonde (200), aus den Messwerten der Impedanz an den ersten Stützstellen (641);
- Bestimmung eines Qualitätskriteriums aus einer Mehrzahl von Messwerten, wobei das Qualitätskriterium für die Messung beinhaltet:
- Bestimmung eines Frequenzsicherheitsabstandes (675) aus der Differenz der Grenzfrequenz für die Impedanz in Luft (670) von der Grenzfrequenz für die Impedanz in dem Füllgut (672);
- Bestimmung eines Frequenzfehlerabstandes (655) aus der Differenz des globalen Minimums (652) und eines zweit-globalen Minimums (654) der Impedanz;
- Bestimmung, ob der Frequenzsicherheitsabstand (675) größer ist als der k-fache Frequenzfehlerabstand (655), wobei der Faktor k einen Wert zwischen 0,5 und 0,7 hat;
- Wenn das Qualitätskriterium für die Messung, insbesondere wegen des Störsenders (500), nicht erfüllt ist,
Beaufschlagen der Messsonde (200) mit der vordefinierten ersten Frequenz (610) und kontinuierliches oder schrittweises Verändern der Frequenz, innerhalb einer vordefinierten zweiten Zeitspanne (632), die sich von der ersten Zeitspanne (631) unterscheidet, bis zu der vordefinierten zweiten Frequenz (620), und
Bestimmung eines Messwerts der Impedanz der Messsonde (200) an jeder zweiten Stützstelle (642) der kontinuierlich oder schrittweise veränderten Frequenz, wobei die Anzahl der zweiten Stützstellen (642) sich von der Anzahl der ersten Stützstellen (641) unterscheidet;
- Wenn das Qualitätskriterium für die Messung erfüllt ist,
Bestimmung, ob ein globales Minimum (652), aus der Vielzahl von lokalen Minima (650), über oder unter der Grenzfrequenz für die Impedanz in Luft (670) liegt,
woraus sich die Bedeckung bestimmen lässt.

2. Impedanzgrenzschalter (100) nach Anspruch 1,
wobei der Faktor k den Wert 0,5 hat.

3. Impedanzgrenzschalter (100) nach Anspruch 1 oder 2,
wobei die vordefinierte zweite Zeitspanne (632) und die Anzahl der zweiten Stützstellen (642) Funktionen des Frequenzfehlerabstandes (655) und des Frequenzsicherheitsabstandes (675) sind.

4. Impedanzgrenzschalter (100) nach einem der vorangegangenen Ansprüche,
wobei, wenn das Qualitätskriterium für die Messung erfüllt ist, als weiterer Schritt erfolgt:
- Beaufschlagen der Messsonde (200) mit der vordefinierten ersten Frequenz (610) und kontinuierliches oder schrittweises Verändern der Frequenz, innerhalb einer vordefinierten dritten Zeitspanne (632), die sich von der ersten (631) und der zweiten (632) Zeitspanne unterscheidet, bis zu der vordefinierten zweiten Frequenz (620); und
Bestimmung einer der Impedanz der Messsonde (200), aus den Messwerten der Impedanz an den dritten Stützstellen (643), deren Anzahl sich von der Anzahl der ersten (641) und der zweiten (642) Stützstellen unterscheidet;
wobei die vordefinierte dritte Zeitspanne (633) und die Anzahl der dritten Stützstellen (643) Funktionen des Frequenzfehlerabstandes (655) und des Frequenzsicherheitsabstandes (675) sind.

5. Impedanzgrenzschalter (100) nach einem der vorangegangenen Ansprüche,
wobei die Anzahl der Stützstellen (641, 642) zwischen 100 und 10 000, insbesondere zwischen 200 und 1000, beispielsweise zwischen 300 und 500, beträgt.

6. Impedanzgrenzschalter (100) nach einem der vorangegangenen Ansprüche,
wobei die vordefinierte erste Frequenz (610) in einem Bereich zwischen 10 MHz und 500 MHz, beispielsweise in einem Bereich zwischen 50 MHz und 250 MHz, und insbesondere in einem Bereich zwischen 90 MHz und 120 MHz, und
die vordefinierte zweite Frequenz (620) in einem Bereich zwischen 20 MHz und 1000 MHz, beispielsweise in einem Bereich zwischen 100 MHz und 500 MHz, und insbesondere in einem Bereich zwischen 170 und 250 MHz, liegt.

7. Impedanzgrenzschalter (100) nach einem der vorangegangenen Ansprüche, wobei die vordefinierte erste Frequenz (610) der zweiten Frequenz von Anspruch 4 entspricht, und
die vordefinierte zweite Frequenz (620) der ersten Frequenz von Anspruch 4 entspricht.

8. Impedanzgrenzschalter (100) nach einem der vorangegangenen Ansprüche,
wobei die vordefinierte erste Zeitspanne (631) und die vordefinierte zweite Zeitspanne (632) zwischen 1 ms und 1000 ms, bevorzugt zwischen 5 ms und 200 ms, beträgt.

9. Verfahren zur Bestimmung der Bedeckung eines Impedanzgrenzschalters (100) mit einem Füllgut (120), mittels des Impedanzgrenzschalters (100), unter Einwirkung eines Störsenders (500), gemäß einem der vorangegangenen Ansprüche, mit den Schritten:
- Beaufschlagen der Messsonde (200) mit einer vordefinierten ersten Frequenz (610) und kontinuierliches oder schrittweises Verändern der Frequenz, innerhalb einer vordefinierten ersten Zeitspanne (631), bis zu einer vordefinierten zweiten Frequenz (620);
- Bestimmung eines Messwerts der Impedanz der Messsonde (200) an jeder ersten Stützstelle (641) der kontinuierlich oder schrittweise veränderten Frequenz;
- Bestimmung einer Vielzahl von lokalen Minima (650) der Impedanz der Messsonde (200), aus den Messwerten der Impedanz an den ersten Stützstellen (641);
- Bestimmung eines Qualitätskriteriums aus einer Mehrzahl von Messwerten, wobei das Qualitätskriterium für die Messung beinhaltet:
- Bestimmung eines Frequenzsicherheitsabstandes (675) aus der Differenz der Grenzfrequenz für die Impedanz in Luft (670) von der Grenzfrequenz für die Impedanz in dem Füllgut (672);
- Bestimmung eines Frequenzfehlerabstandes (655) aus der Differenz des globalen Minimums (652) und eines zweit-globalen Minimums (654) der Impedanz;
- Bestimmung, ob der Frequenzfehlerabstand (655) kleiner ist als der k-fache Frequenzsicherheitsabstand (675), wobei der Faktor keinen Wert zwischen 0,3 und 0,7 hat;
- Wenn das Qualitätskriterium für die Messung nicht erfüllt ist,
Beaufschlagen der Messsonde (200) mit der vordefinierten ersten Frequenz (610) und kontinuierliches oder schrittweises Verändern der Frequenz, innerhalb einer vordefinierten zweiten Zeitspanne (632), die sich von der ersten Zeitspanne (631) unterscheidet, bis zu der vordefinierten zweiten Frequenz (620), und
Bestimmung eines Messwerts der Impedanz der Messsonde (200) an jeder zweiten Stützstelle (642) der kontinuierlich oder schrittweise veränderten Frequenz, wobei die Anzahl der zweiten Stützstellen (642) sich von der Anzahl der ersten Stützstellen (641) unterscheidet;
- Wenn das Qualitätskriterium für die Messung erfüllt ist,
Bestimmung, ob ein globales Minimum (652), aus der Vielzahl von lokalen Minima (650), über oder unter der Grenzfrequenz für die Impedanz in Luft (670) liegt,
woraus sich die Bedeckung bestimmen lässt.

10. Verfahren nach Anspruch 9,
wobei der Faktor k den Wert 0,5 hat.

11. Verfahren nach Anspruch 9 oder 10,
wobei die vordefinierte zweite Zeitspanne (632) und die Anzahl der zweiten Stützstellen (642) Funktionen des Frequenzfehlerabstandes (655) und des Frequenzsicherheitsabstandes (675) sind.

12. Verfahren nach Anspruch 9 bis 11,
wobei, wenn das Qualitätskriterium für die Messung erfüllt ist, als weiterer Schritt erfolgt:
- Beaufschlagen der Messsonde (200) mit der vordefinierten ersten Frequenz (610) und kontinuierliches oder schrittweises Verändern der Frequenz, innerhalb einer vordefinierten dritten Zeitspanne (632), die sich von der ersten (631) und der zweiten (632) Zeitspanne unterscheidet, bis zu der vordefinierten zweiten Frequenz (620); und
- Bestimmung einer der Impedanz der Messsonde (200), aus den Messwerten der Impedanz an den dritten Stützstellen (643), deren Anzahl sich von der Anzahl der ersten (641) und der zweiten (642) Stützstellen unterscheidet;
wobei die vordefinierte dritte Zeitspanne (633) und die Anzahl der dritten Stützstellen (643) Funktionen des Frequenzfehlerabstandes (655) und des Frequenzsicherheitsabstandes (675) sind.

13. Verwendung eines Impedanzgrenzschalters (100) nach einem der Ansprüche 1 bis 8 oder eines Verfahrens nach Anspruch 9 bis 11 zur Messung der Bedeckung des Impedanzgrenzschalters (100)
mit Flüssigkeiten, insbesondere mit einem DK-Wert zwischen 1,5 und 81, z.B. Wasser, Saft, Milch, Alkohole, Öle, Farbe, Ketchup, Honig, oder
mit Schüttgut, insbesondere von granulierten oder pulverförmigen Schüttgütern, insbesondere mit einem DK-Wert zwischen 1,5 und 81, z.B. Mehl, Sand, Kaffeepulver, Kunststoffgranulat.

14. Programmelement, welches, wenn es auf der Prozessoreinheit (450) eines Impedanzgrenzschalters (100) ausgeführt wird, den Impedanzgrenzschalter (100) anweist, das Verfahren nach Anspruch 9 bis 11 durchzuführen.

15. Computerlesbares Medium, auf dem ein Programmelement nach Anspruch 14 gespeichert ist.

## Claims

1. An impedance limit switch (100) for determining a coverage of the impedance limit switch (100) with a filling material (120), comprising:
a measuring probe (200),
a variable frequency generator (300) configured to apply a frequency to the measuring probe (200), and
an analysis unit (400) configured to determine the impedance of the measuring probe (200) at a certain frequency,
wherein the impedance measured by the analysis unit (400) can be influenced by a jamming transmitter (500),
wherein the impedance limit switch (100) is arranged to perform the following steps:
- applying a predefined first frequency (610) to the measuring probe (200) and continuously or stepwise changing the frequency, within a predefined first time period (631), up to a predefined second frequency (620);
- determining a measured value of the impedance of the measuring probe (200) at each first supporting point (641) of the continuously or stepwise changed frequency;
- determining a plurality of local minima (650) of the impedance of the measuring probe (200), from the measured values of the impedance at the first support points (641);
- determining a quality criterion from a plurality of measured values, wherein the quality criterion for the measurement includes:
- determining a frequency safety margin (675) from the difference of the cut-off frequency for the impedance in air (670) from the cut-off frequency for the impedance in the medium (672);
- determining a frequency error margin (655) from the difference of the global minimum (652) and a second-global minimum (654) of the impedance;
- determining if the frequency safety margin (675) is greater than the k-fold frequency error margin (655), wherein the factor k has a value between 0.5 and 0.7;
- if the quality criterion for the measurement is not met, especially because of the interfering transmitter (500),
applying the predefined first frequency (610) to the measuring probe (200) and continuously or stepwise changing the frequency, within a predefined second time period (632) different from the first time period (631), up to the predefined second frequency (620), and
determining a measured value of the impedance of the measuring probe (200) at every second supporting point (642) of the continuously or stepwise changed frequency, wherein the number of second supporting points (642) differs from the number of first supporting points (641);
- if the quality criterion for the measurement is met,
determining whether a global minimum (652), out of the plurality of local minima (650), is above or below the cutoff frequency for impedance in air (670),
from which the coverage can be determined.

2. The impedance limit switch (100) according to claim 1,
wherein the factor k has the value 0.5.

3. The impedance limit switch (100) according to claim 1 or 2,
wherein the predefined second time period (632) and the number of second interpolation points (642) are functions of the frequency error margin (655) and the frequency security margin (675).

4. The impedance limit switch (100) according to any one of the preceding claims,
wherein, if the quality criterion for the measurement is met, as a further step:
- applying the predefined first frequency (610) to the measurement probe (200) and continuously or incrementally changing the frequency, within a predefined third time period (632) different from the first (631) and second (632) time periods, up to the predefined second frequency (620); and determining one of the impedance of the measuring probe (200), from the measured values of the impedance at the third supporting points (643), the number of which is different from the number of the first (641) and the second (642) supporting points;
wherein the predefined third time period (633) and the number of third interpolation points (643) are functions of the frequency error margin (655) and the frequency security margin (675).

5. The impedance limit switch (100) according to any one of the preceding claims,
wherein the number of supporting points (641, 642) is between 100 and 10 000, in particular between 200 and 1000, for example between 300 and 500.

6. The impedance limit switch (100) according to any one of the preceding claims,
wherein the predefined first frequency (610) is in a range between 10 MHz and 500 MHz, for example in a range between 50 MHz and 250 MHz, and in particular in a range between 90 MHz and 120 MHz, and
the predefined second frequency (620) is in a range between 20 MHz and 1000 MHz, for example in a range between 100 MHz and 500 MHz, and in particular in a range between 170 and 250 MHz.

7. The impedance limit switch (100) according to any one of the preceding claims,
wherein the predefined first frequency (610) corresponds to the second frequency of claim 4, and
the predefined second frequency (620) corresponds to the first frequency of claim 4.

8. The impedance limit switch (100) according to any one of the preceding claims,
wherein the predefined first time period (631) and the predefined second time period (632) are between 1 ms and 1000 ms, preferably between 5 ms and 200 ms.

9. Method for determining the coverage of an impedance limit switch (100) with a filling material (120), by means of the impedance limit switch (100), influenced by a jamming transmitter (500), according to any one of the preceding claims, comprising the steps:
- applying a predefined first frequency (610) to the measuring probe (200) and continuously or stepwise changing the frequency, within a predefined first time period (631), up to a predefined second frequency (620);
- determining a measured value of the impedance of the measuring probe (200) at each first supporting point (641) of the continuously or stepwise changed frequency;
- determining a plurality of local minima (650) of the impedance of the measuring probe (200), from the measured values of the impedance at the first support points (641);
- determining a quality criterion from a plurality of measured values, wherein the quality criterion for the measurement includes:
- determining a frequency safety margin (675) from the difference of the cut-off frequency for the impedance in air (670) from the cut-off frequency for the impedance in the medium (672);
- determining a frequency error margin (655) from the difference of the global minimum (652) and a second-global minimum (654) of the impedance;
- determining if the frequency error margin (655) is less than k times the frequency safety margin (675), wherein the factor k has a value between 0.3 and 0.7;
- if the quality criterion for the measurement is not met,
applying the predefined first frequency (610) to the measuring probe (200) and continuously or stepwise changing the frequency, within a predefined second time period (632) different from the first time period (631), up to the predefined second frequency (620), and
determining a measured value of the impedance of the measuring probe (200) at every second supporting point (642) of the continuously or stepwise changed frequency, wherein the number of second supporting points (642) differs from the number of first supporting points (641);
- if the quality criterion for the measurement is met,
determining whether a global minimum (652), out of the plurality of local minima (650), is above or below the cutoff frequency for impedance in air (670),
from which the coverage can be determined.

10. The method of claim 9,
wherein the factor k has the value 0.5.

11. The method according to claim 9 or 10,
wherein the predefined second time period (632) and the number of second interpolation points (642) are functions of the frequency error margin (655) and the frequency security margin (675).

12. The method according to claim 9 to 11,
wherein, if the quality criterion for the measurement is met, as a further step:
- applying the predefined first frequency (610) to the measurement probe (200) and continuously or incrementally changing the frequency, within a predefined third time period (632) different from the first (631) and second (632) time periods, up to the predefined second frequency (620); and
- determining one of the impedance of the measuring probe (200), from the measured values of the impedance at the third supporting points (643), the number of which is different from the number of the first (641) and the second (642) supporting points;
wherein the predefined third time period (633) and the number of third interpolation points (643) are functions of the frequency error margin (655) and the frequency security margin (675).

13. Use of an impedance limit switch (100) according to any one of claims 1 to 8 or a method according to claims 13 to 15 for measuring the coverage of the impedance limit switch (100).
with liquids, particularly with a DK value between 1.5 and 81, e.g. water, juice, milk, alcohols, oils, paint, ketchup, honey, or
with bulk material, in particular granulated or powdery bulk material, particularly with a DK value between 1.5 and 81, e.g. flour, sand, coffee powder, plastic granules.

14. A program element which, when executed on the processing unit (450) of an impedance limit switch (100), instructs the impedance limit switch (100) to perform the method of claims 9 to 11.

15. A computer-readable medium on which is stored a program element according to claim 14.

## Revendications

1. Détecteur de niveau à impédance (100) permettant de déterminer que le détecteur de niveau à impédance (100) est recouvert d'un matériau de remplissage (120), comportant :
une sonde de mesure (200),
un générateur de fréquence (300) à fréquence variable, conçu pour appliquer une fréquence à la sonde de mesure (200), et
une unité d'analyse (400) conçue pour déterminer l'impédance de la sonde de mesure (200) à une fréquence déterminée,
dans lequel l'impédance mesurée par l'unité d'analyse (400) peut être influencée par un émetteur brouilleur (500), dans lequel le détecteur de niveau à impédance (100) est conçu pour mettre en œuvre les étapes suivantes consistant à :
- appliquer une première fréquence prédéfinie (610) à la sonde de mesure (200) et faire varier la fréquence de façon continue ou progressive, sur un premier intervalle de temps prédéfini (631), jusqu'à une seconde fréquence prédéfinie (620) ;
- déterminer une valeur mesurée de l'impédance de la sonde de mesure (200) à chaque premier point d'échantillonnage (641) de la fréquence ayant varié de façon continue ou progressive ;
- déterminer une pluralité de minima locaux (650) de l'impédance de la sonde de mesure (200) à partir des valeurs mesurées de l'impédance aux premiers points d'échantillonnage (641) ;
- déterminer un critère de qualité à partir d'une pluralité de valeurs mesurées, le critère de qualité pour la mesure comprenant de :
- déterminer un écart de sécurité entre les fréquences (675) à partir de la différence entre la fréquence limite pour l'impédance dans l'air (670) et la fréquence limite pour l'impédance dans le matériau de remplissage (672) ;
- déterminer un écart d'erreur de fréquence (655) à partir de la différence entre le minimum global (652) et un second minimum global (654) de l'impédance ;
- déterminer si l'écart de sécurité entre les fréquences (675) est supérieur à un écart d'erreur de fréquence multiplié par k (655), dans lequel le facteur k a une valeur comprise entre 0,5 et 0,7 ;
- lorsque le critère de qualité pour la mesure n'est pas satisfait, en particulier à cause de l'émetteur brouilleur (500) :
appliquer la première fréquence prédéfinie (610) à la sonde de mesure (200) et faire varier la fréquence de façon continue ou progressive, sur un deuxième intervalle de temps prédéfini (632), qui est différent du premier intervalle de temps (631), jusqu'à la seconde fréquence prédéfinie (620), et
déterminer une valeur mesurée de l'impédance de la sonde de mesure (200) à chaque deuxième point d'échantillonnage (642) de la fréquence ayant varié de façon continue ou progressive, dans lequel le nombre des deuxièmes points d'échantillonnage (642) est différent du nombre des premiers points d'échantillonnage (641) ;
- lorsque le critère de qualité pour la mesure est satisfait :
déterminer si un minimum global (652), à partir de la pluralité de minima locaux (650), se situe au-dessus ou au-dessous de la fréquence limite pour l'impédance dans l'air (670),
ce qui permet de déterminer le recouvrement.

2. Détecteur de niveau à impédance (100) selon la revendication 1, dans lequel le facteur k a une valeur de 0,5.

3. Détecteur de niveau à impédance (100) selon la revendication 1 ou 2,
dans lequel le deuxième intervalle de temps prédéfini (632) et le nombre des deuxièmes points d'échantillonnage (642) sont fonction de l'écart d'erreur de fréquence (655) et de l'écart de sécurité entre les fréquences (675).

4. Détecteur de niveau à impédance (100) selon l'une des revendications précédentes,
dans lequel, lorsque le critère de qualité pour la mesure est satisfait, l'étape supplémentaire suivante est mise en oeuvre :
- appliquer la première fréquence prédéfinie (610) à la sonde de mesure (200) et faire varier la fréquence de façon continue ou progressive, sur un troisième intervalle de temps prédéfini (632), qui est différent des premier (631) et deuxième (632) intervalles de temps, jusqu'à la seconde fréquence prédéfinie (620) ; et
déterminer l'une des impédances de la sonde de mesure (200) à partir des valeurs mesurées de l'impédance aux troisièmes points d'échantillonnage (643), dont le nombre est différent du nombre des premiers (641) et deuxièmes (642) points d'échantillonnage ;
dans lequel le troisième intervalle de temps prédéfini (633) et le nombre des troisièmes points d'échantillonnage (643) sont fonction de l'écart d'erreur en fréquence (655) et de l'écart de sécurité entre les fréquences (675).

5. Détecteur de niveau à impédance (100) selon l'une des revendications précédentes,
dans lequel le nombre des points d'échantillonnage (641, 642) est compris entre 100 et 10 000, en particulier entre 200 et 1 000, par exemple entre 300 et 500.

6. Détecteur de niveau à impédance (100) selon l'une des revendications précédentes,
dans lequel la première fréquence prédéfinie (610) est dans une plage comprise entre 10 MHz et 500 MHz, par exemple dans une plage comprise entre 50 MHz et 250 MHz, et en particulier dans une plage comprise entre 90 MHz et 120 MHz, et
la seconde fréquence prédéfinie (620) est dans une plage comprise entre 20 MHz et 1 000 MHz, par exemple dans une plage comprise entre 100 MHz et 500 MHz, et en particulier dans une plage comprise entre 170 et 250 MHz.

7. Détecteur de niveau à impédance (100) selon l'une des revendications précédentes,
dans lequel la première fréquence prédéfinie (610) correspond à la seconde fréquence de la revendication 4, et
la seconde fréquence prédéfinie (620) correspond à la première fréquence de la revendication 4.

8. Détecteur de niveau à impédance (100) selon l'une des revendications précédentes,
dans lequel le premier intervalle de temps prédéfini (631) et le deuxième intervalle de temps prédéfini (632) sont compris entre 1 ms et 1 000 ms, de préférence entre 5 ms et 200 ms.

9. Procédé pour déterminer qu'un détecteur de niveau à impédance (100) est recouvert d'un matériau de remplissage (120), au moyen du détecteur de niveau à impédance (100), sous l'effet d'un émetteur brouilleur (500), selon l'une des revendications précédentes, comportant les étapes consistant à :
- appliquer une première fréquence prédéfinie (610) à la sonde de mesure (200) et faire varier la fréquence de façon continue ou progressive, sur un premier intervalle de temps prédéfini (631), jusqu'à une seconde fréquence prédéfinie (620) ;
- déterminer une valeur mesurée de l'impédance de la sonde de mesure (200) à chaque premier point d'échantillonnage (641) de la fréquence ayant varié de façon continue ou progressive ;
- déterminer une pluralité de minima locaux (650) de l'impédance de la sonde de mesure (200) à partir des valeurs mesurées de l'impédance aux premiers points d'échantillonnage (641) ;
- déterminer un critère de qualité à partir d'une pluralité de valeurs mesurées, le critère de qualité pour la mesure comprenant de :
- déterminer un écart de sécurité entre les fréquences (675) à partir de la différence entre la fréquence limite pour l'impédance dans l'air (670) et la fréquence limite pour l'impédance dans le matériau de remplissage (672) ;
- déterminer un écart d'erreur de fréquence (655) à partir de la différence entre le minimum global (652) et un second minimum global (654) de l'impédance ;
- déterminer si l'écart d'erreur de fréquence (655) est inférieur à l'écart de sécurité entre les fréquences multiplié par k (675), dans lequel le facteur k a une valeur comprise entre 0,3 et 0,7 ;
- lorsque le critère de qualité pour la mesure n'est pas satisfait:
appliquer la première fréquence prédéfinie (610) à la sonde de mesure (200) et faire varier la fréquence de façon continue ou progressive, sur un deuxième intervalle de temps prédéfini (632), qui est différent du premier intervalle de temps (631), jusqu'à la seconde fréquence prédéfinie (620), et
déterminer une valeur mesurée de l'impédance de la sonde de mesure (200) à chaque deuxième point d'échantillonnage (642) de la fréquence ayant varié de façon continue ou progressive, dans lequel le nombre des deuxièmes points d'échantillonnage (642) est différent du nombre des premiers points d'échantillonnage (641) ;
- lorsque le critère de qualité pour la mesure est satisfait :
déterminer si un minimum global (652), à partir de la pluralité de minima locaux (650), se situe au-dessus ou au-dessous de la fréquence limite pour l'impédance dans l'air (670),
ce qui permet de déterminer le recouvrement.

10. Procédé selon la revendication 9, dans lequel le facteur k a une valeur de 0,5.

11. Procédé selon la revendication 9 ou 10,
dans lequel le deuxième intervalle de temps prédéfini (632) et le nombre des deuxièmes points d'échantillonnage (642) sont fonction de l'écart d'erreur de fréquence (655) et de l'écart de sécurité entre les fréquences (675).

12. Procédé selon la revendication 9 à 11,
dans lequel, lorsque le critère de qualité pour la mesure est satisfait, l'étape supplémentaire suivante est mise en oeuvre :
- appliquer la première fréquence prédéfinie (610) à la sonde de mesure (200) et faire varier la fréquence de façon continue ou progressive, sur un troisième intervalle de temps prédéfini (632), qui est différent des premier (631) et deuxième (632) intervalles de temps, jusqu'à la seconde fréquence prédéfinie (620) ; et
- déterminer l'une des impédances de la sonde de mesure (200) à partir des valeurs mesurées de l'impédance aux troisièmes points d'échantillonnage (643), dont le nombre est différent du nombre des premiers (641) et deuxièmes (642) points d'échantillonnage ;
dans lequel le troisième intervalle de temps prédéfini (633) et le nombre des troisièmes points d'échantillonnage (643) sont fonction de l'écart d'erreur de fréquence (655) et de l'écart de sécurité entre les fréquences (675).

13. Utilisation d'un détecteur de niveau à impédance (100) selon l'une des revendications 1 à 8 ou procédé selon la revendication 9 à 11 pour mesurer le recouvrement du détecteur de niveau à impédance (100) par
des liquides, ayant en particulier une valeur DK comprise entre 1,5 et 81, par exemple de l'eau, du jus, du lait, des alcools, des huiles, des colorants, du ketchup, du miel, ou
un matériau en vrac, en particulier des matériaux en vrac granulés ou pulvérulents, ayant en particulier une valeur DK comprise entre 1,5 et 81, par exemple de la farine, du sable, de la poudre de café, un granulat de matière plastique.

14. Élément de programme qui, lorsqu'il est exécuté sur l'unité de processeur (450) d'un détecteur de niveau à impédance (100) ordonne au détecteur de niveau à impédance (100) de mettre en œuvre le procédé selon la revendication 9 à 11.

15. Support lisible par ordinateur sur lequel est stocké un élément de programme selon la revendication 14.
